# FASCICULE DE BREVET EUROPEEN

(11) **EP 2 139 718 B1**
(45) Date de publication et mention de la délivrance du brevet: **05.06.2013**
(21) Numéro de dépôt: 08788205.6
(22) Date de dépôt: 18.04.2008
(51) Int. Cl.: B60N 2/42, B60N 2/427

(54) **DISPOSITIF D' ABSORPTION D'ENERGIE POUR SIEGE DE VEHICULE AUTOMOBILE, ASSEMBLAGE ET ENSEMBLE COMPRENANT LE DISPOSITIF**
ENERGIEAUFNAHMEVORRICHTUNG FÜR EINEN AUTOMOBILSITZ SOWIE ANORDNUNG UND SITZ MIT EINER SOLCHEN VORRICHTUNG
ENERGY ABSORPTION DEVICE FOR AUTOMOBILE SEAT, AND ASSEMBLY AND SET INCLUDING SAID DEVICE

(30) Priorité: 20.04.2007 DE 102007018715; 05.06.2007 FR 0704003
(43) Date de publication de la demande: 06.01.2010
(73) Titulaire: Faurecia Autositze GmbH, 31655 Stadthagen (DE)
(72) Inventeur: MEGHIRA, Julien, F-94110 Arcueil (FR); HAVERKAMP, Michael, 30455 Hannover (DE)
(74) Mandataire: Cabinet Plasseraud
(86) Numéro de dépôt international: PCT/FR2008/050704
(87) Numéro de publication internationale: WO 2008/145916

(56) Documents cités:
- EP-A- 1 547 857
- WO-A-2008/017794
- DE-A1- 19 807 581
- DE-A1-102007 018 715
- GB-A- 2 421 277

## Description

L'invention concerne un dispositif d'absorption d'énergie en cas de choc, en particulier pour siège de véhicule automobile. L'invention concerne en outre un assemblage et un ensemble comprenant le dispositif d'absorption d'énergie.

Un tel dispositif est destiné à réduire les contraintes subies par l'occupant du véhicule assis sur le siège en absorbant progressivement l'énergie cinétique auquel son corps est soumis. L'invention est plus particulièrement destinée à l'absorption d'énergie en cas de choc arrière, mais est également applicable à un choc avant, voire à d'autres types de chocs.

On connait usuellement des dispositifs d'absorption d'énergie se présentant sensiblement sous forme d'une plaque présentant une succession de découpes se succédant suivant une direction de déformation entre une première découpe et une dernière découpe et définissant entre elles au moins un pontet s'étendant suivant une direction d'allongement transversale à la direction de déformation voir le document WO-A-2008/01 7794, cité vise à l'article 54(3) CBE.

Le document EP 1 547 857 A divulgue un dispositif d'absorption d'énergie présentant en outre les caractéristiques suivantes :
- la première découpe est séparée d'une deuxième découpe lui succédant selon la direction de déformation par un premier pontet, ledit premier pontet présentant un premier bord s'étendant sensiblement suivant la direction transversale entre deux extrémités et délimitant la première découpe, et
- la première découpe est en outre délimitée par deux bords d'évasement s'étendant chacun sensiblement suivant la direction de déformation jusqu'à une extrémité frontale par laquelle il se raccorde à l'une des extrémités dudit premier bord, et
- la première découpe présente une forme s'évasant suivant la direction de déformation, en direction des découpes suivantes.

L'invention vise à améliorer l'absorption d'énergie procurée par un tel dispositif.

Pour ce faire, conformément à l'invention, lesdits bords d'évasement formant entre eux un angle d'évasement compris entre 10 degrés et 40 degrés.

Ainsi, on réduit l'incertitude concernant la zone de rupture du premier pontet, ce qui réduit l'incertitude concernant l'effort résistant opposé par le dispositif.

De préférence, l'angle d'évasement est compris entre 25 degrés et 35 degrés.

Selon une autre caractéristique complémentaire, de préférence des congés de raccordement présentant un rayon de courbure compris entre 1 millimètre et 2 millimètres sont interposés entre les extrémités frontales des bords d'évasement et les extrémités dudit premier bord.

Ces congés de raccordement créent des concentrations de contrainte permettant de réduire l'incertitude concernant la zone de rupture des pontets.

Selon encore une autre caractéristique complémentaire, de préférence les congés de raccordement forment des creux dans le premier pontet.

Ainsi, les creux génèrent un affaiblissement localisé du pontet permettant de mieux maitriser sa rupture.

Selon encore une autre caractéristique complémentaire, suivant la direction d'allongement, la première découpe présente entre les extrémités frontales des bords d'évasement une largeur sensiblement égale à la largeur de la deuxième découpe.

On conserve ainsi un dispositif de largeur constante suivant la direction d'allongement, tout en ayant une bonne maitrise de la rupture des pontets.

Selon encore une autre caractéristique complémentaire conforme à l'invention, de préférence le dispositif comprend une pluralité de pontets et, suivant la direction d'allongement, la première découpe présente entre les extrémités frontales des bords d'évasement une largeur sensiblement égale à la largeur des autres découpes.

On conserve ainsi un dispositif de largeur constante suivant la direction d'allongement ce qui permet de réduire son encombrement, on obtient plus aisément une résistance sensiblement égale de tous les pontets de part leur largeur identique et on réduit l'influence du frottement (dénommé usuellement ramonage) d'un pontet cassé sur le bord des découpes sur l'effort résistant opposé par le dispositif, ce qui permet de réduire les variations et les incertitudes concernant l'effort résistant opposé par le dispositif.

Selon encore une autre caractéristique conforme à l'invention, de préférence tous les pontets présentent une striction réduisant leur largeur suivant la direction de déformation à chacune de leur extrémité suivant la direction d'allongement.

La maîtrise de la zone de rupture des pontets et de leur résistance est ainsi améliorée.

L'invention concerne en outre un assemblage comprenant un dispositif d'absorption d'énergie présentant les caractéristiques précitées et une pièce support, dans lequel le dispositif d'absorption d'énergie est encastré dans un logement ménagé dans la pièce support.

Ainsi, un même dispositif d'absorption d'énergie peut être utilisé pour des applications différentes.

L'invention concerne en outre un ensemble comprenant un dispositif d'absorption d'énergie présentant les caractéristiques précitées et une tige de section circulaire s'étendant dans la première découpe perpendiculairement à la direction de déformation et à la direction d'allongement, à l'intérieur de laquelle elle est étroitement reçue.

D'autres caractéristiques et avantages de la présente invention apparaîtront dans la description détaillée suivante, se référant aux dessins annexés dans lesquels :
- la figure 1 représente un siège conforme à l'invention, avant choc,
- la figure 2 représente en perspective, à échelle agrandie, la zone repérée II à la figure 1,
- la figure 3 représente la zone II, à échelle agrandie, en coupe sans la tête de la vis,
- la figure 4 est une représentation conformément à la figure 3, au cours d'un choc,
- la figure 5 est une représentation conformément à la figure 3, après un choc,
- la figure 6 représente une variante de réalisation conformément à la figure 3,
- la figure 7 représente en éclaté la variante de réalisation de la figure 6.

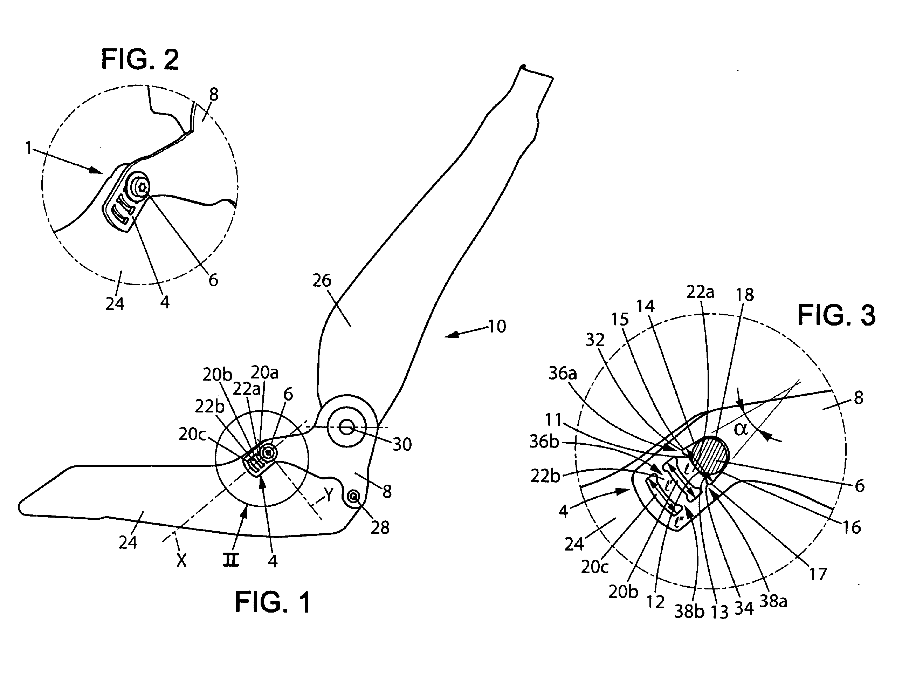

La figure 1 illustre un siège 10 de véhicule automobile comprenant essentiellement une structure d'assise 24, une vis de fixation 6 solidaire de la structure d'assise 24, un dispositif d'absorption d'énergie 4, un adaptateur 8, un dispositif d'articulation en rotation 30 et une structure de dossier 26.

Le dispositif d'absorption d'énergie 4 est interposé entre la vis de fixation 6 solidaire de la structure d'assise 24 et l'adaptateur 8. Le dispositif d'absorption d'énergie 1 permet d'absorber l'énergie cinétique de l'occupant du siège 10 en cas de choc, en autorisant une rotation contrôlée de la structure de dossier 26 par rapport à la structure d'assise 24 par déformation.

Le dispositif d'articulation en rotation 30 est interposé entre l'adaptateur 8 et la structure de dossier 26. Il permet de régler l'inclinaison de la structure de dossier 26 par rapport à la structure d'assise 24. Etant bien connu en soi, en particulier de type articulation à grains ou de type articulation continue, le dispositif d'articulation en rotation 30 ne sera pas détaillé davantage.

Dans le mode de réalisation illustré aux figures 1 à 5, le dispositif d'absorption d'énergie 4 est intégré à l'adaptateur 8. L'adaptateur 8 est maintenu sur la structure d'assise 24 au moyen d'un pivot 28 et de la vis de fixation 6 vissée dans la structure d'assise 24. L'adaptateur 8 est constitué par une plaque mise en forme d'épaisseur sensiblement constante, de préférence de l'ordre de 2 à 4 millimètres.

Le dispositif d'absorption d'énergie 4 est situé dans une portion extrême de l'adaptateur éloignée du pivot 28. Tel qu'illustré plus précisément à la figure 3, il présente une succession de découpes 20a, 20b, 20c, dans l'exemple illustré trois découpes, se succédant suivant une direction de déformation X sensiblement rectiligne. La direction de déformation X s'étend sensiblement circonférentiellement par rapport au pivot 28, avec une légère déviation du fait d'une déformation d'ensemble prévue de l'adaptateur 8.

Les découpes 20a, 20b, 20c définissent entre elles des pontets 22a, 22b, au nombre de deux dans le mode de réalisation illustré. Les pontets 22a, 22b s'étendent chacun suivant une direction d'allongement Y et présentent suivant la direction de déformation X une largeur qui est sensiblement constante sur toute leur longueur. Ils présentent toutefois une striction 36a, 36b ; 38a, 38b à chacune de leurs extrémités.

La première découpe 20a est essentiellement délimitée par un premier bord 12 du premier pontet 22a, deux bords d'évasement 14, 16 et un bord arrière 18.

Le bord arrière 18 présente sensiblement une forme en demi-cercle s'étendant étroitement autour de la vis de fixation 6 et reliant l'extrémité arrière des bords d'évasement 14, 16.

Les bords d'évasement 14, 16 sont sensiblement rectilignes et sont disposés symétriquement par rapport à la direction de déformation X. Ils s'écartent l'un de l'autre suivant un angle d'évasement α en direction du premier bord 12 du premier pontet 22a jusqu'à leur extrémité frontale respective 15, 17.

L'angle d'évasement α est avantageusement de l'ordre de 30 degrés avec une vis de fixation 6 s'étendant à travers la première découpe 20a de diamètre 10 millimètres. La vis de fixation 6 s'étend perpendiculairement à la direction de déformation X et à la direction d'allongement Y. Tel qu'illustré à la figure 3, la tige de la vis de fixation 6 est étroitement reçue dans la première découpe 20a, ladite vis de fixation 6 venant sensiblement au contact du premier bord 12, du bord arrière 18 et des bords d'évasement 14, 16.

La première découpe 20a présente une largeur maximale 1 suivant la direction d'allongement Y entre les extrémités frontales 15, 17 des bords d'évasement 14, 16. La largeur l est égale à la largeur l' , l" de la deuxième découpe 20b et de la troisième découpe 20c suivant la direction d'allongement Y. Dans le cas d'une vis de fixation 6 de diamètre 10 millimètres, lesdites largeurs 1, l', l" sont avantageusement sensiblement égales à 13 millimètres.

Le premier bord 12 du premier pontet 22a est sensiblement rectiligne et s'étend suivant la direction d'allongement Y entre deux extrémités 11, 13.

Un congé de raccordement 32, 34 relie chacune des extrémités 11, 13 du premier bord 12 à l'extrémité frontale respective 15, 17 des bords d'évasement 14, 16. Ces congés de raccordement présentent ici sensiblement une forme en demi-cercle creusé dans le premier pontet 22a. Le rayon de ces congés de raccordement est de préférence sensiblement égal à 1 milimètre.

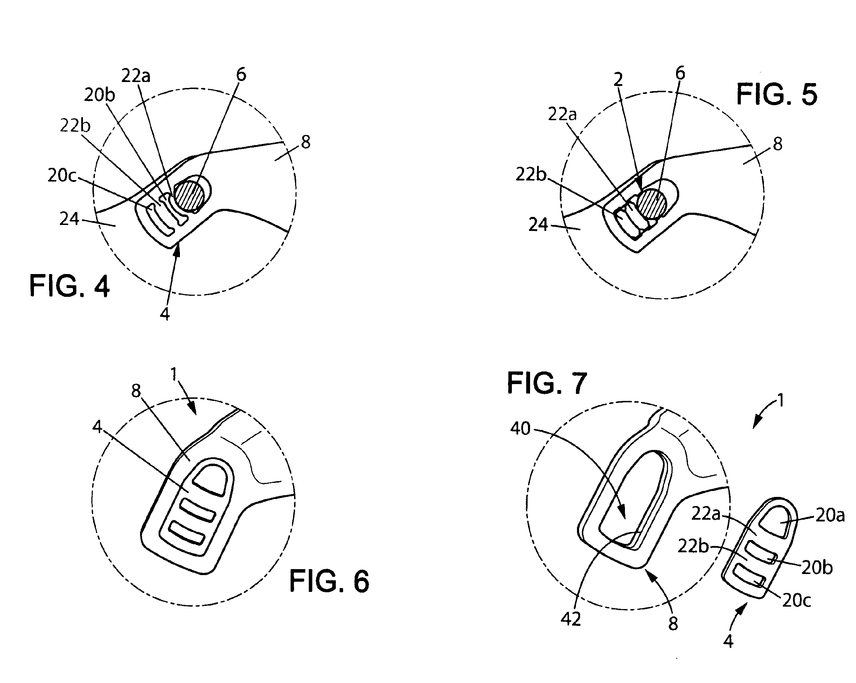

En cas de choc arrière subi par le véhicule, l'occupant du siège 10 exerce une pression très élevée sur la structure de dossier 26 du siège, tendant à faire pivoter l'adaptateur 8 autour du pivot 28 et, tel qu'illustré à la figure 4, à déplacer le pontet 22a vers la tige de la vis de fixation 6 suivant la direction de déformation X, autrement dit à déplacer la vis de fixation 6 par rapport à l'adaptateur 8 suivant la direction de déformation X vers la dernière découpe 20c.

Au cours du déplacement de la vis de fixation 6 suivant la direction de déformation, le pontet 22a du dispositif d'absorption d'énergie 4 est contraint et se déforme. Puis, si le choc est fort, le pontet 22a se rompt sensiblement entre l'extrémité des bords d'évasement 15, 17 et les extrémités 11, 13 du premier bord 12, tel qu'illustré à la figure 5.

Si le choc est très important, le deuxième pontet 22b se déforme et se rompt à son tour. Du fait de l'angle d'évasement α entre les bords d'évasement 14, 16, la rupture des deux pontets 22a, 22b s'effectue sensiblement au même endroit suivant la direction d'allongement Y. Ainsi, le bord cassé des deux pontets 22a, 22b cassés n'engendrent pas par frottement un effort résistant très important sur le bord des découpes, ce qui permet d'obtenir une bonne constance dans l'effort résistant procuré par le dispositif d'absorption d'énergie 4.

Les figurent 6 et 7 illustrent une variante de réalisation dans laquelle le dispositif d'absorption d'énergie 4 n'est pas intégré à l'adaptateur 8, mais maintenu dans un logement 40 ménagé dans l'adaptateur 8. Un épaulement 42 contre lequel le dispositif d'absorption 4 vient en appui est réalisé dans le logement 40, afin de bien positionner le dispositif d'absorption d'énergie 4 dans le logement 40.

De préférence, le dispositif d'absorption d'énergie 4 est maintenu par soudure sur l'adaptateur 8. Avantageusement, l'adaptateur a une épaisseur d'environ 3 à 4 millimètres, le dispositif d'absorption d'énergie 4 est réalisé dans une plaque de 2 à 3 millimètres d'épaisseur et l'épaulement 42 a une épaisseur sensiblement égale à la différence entre les deux, soit environ 1 millimètre.

## Revendications

1. Dispositif (4) d'absorption d'énergie en particulier pour siège (10) de véhicule automobile en cas de choc, ledit dispositif (4) se présentant sensiblement sous forme d'une plaque présentant une succession de découpes (20a, 20b, 20c) se succédant suivant une direction de déformation (X) entre une première découpe (20a) et une dernière découpe (20c) et définissant entre elles au moins un pontet (22a, 22b) s'étendant suivant une direction d'allongement (Y) transversale à la direction de déformation (X), la première découpe (20a) est séparée d'une deuxième découpe (20b) lui succédant selon la direction de déformation (X) par un premier pontet (22a), dans lequel :
- ledit premier pontet (22a) présente un premier bord (12) s'étendant sensiblement suivant la direction transversale (Y) entre deux extrémités (11, 13) et délimitant la première découpe (20a), et
- la première découpe (20a) est en outre délimitée par deux bords d'évasement (14, 16) s'étendant chacun sensiblement suivant la direction de déformation (X) jusqu'à une extrémité frontale (15, 17) par laquelle il se raccorde à l'une des extrémités (11, 13) dudit premier bord,
- la première découpe (20a) présente une forme s'évasant suivant la direction de déformation (X), en direction des découpes suivantes (20b, 20c), et lesdits bords d'évasement forment entre eux un angle d'évasement (α) compris entre 10 degrés et 40 degrés.

2. Dispositif d'absorption d'énergie selon la revendication 1, dans lequel l'angle d'évasement (α) est compris entre 25 degrés et 35 degrés.

3. Dispositif d'absorption d'énergie selon la revendication 1 ou la revendication 2, dans lequel des congés de raccordement (32, 34) présentant un rayon de courbure compris entre 1 millimètre et 2 millimètres sont interposés entre les extrémités frontales (15, 17) des bords d'évasement (14, 16) et les extrémités (11, 13) dudit premier bord (12).

4. Dispositif d'absorption d'énergie selon la revendication précédente, dans lequel les congés de raccordement (32, 34) forment des creux dans le premier pontet (22a).

5. Dispositif d'absorption d'énergie selon l'une quelconque des revendications précédentes, dans lequel suivant la direction d'allongement (Y), la première découpe (20a) présente entre les extrémités frontales (15, 17) des bords d'évasement (14, 16) une largeur (1) sensiblement égale à la largeur (1') de la deuxième découpe (20b).

6. Dispositif d'absorption d'énergie selon la revendication précédente, comprenant une pluralité de pontets (22a, 22b) et dans lequel, suivant la direction d'allongement (Y), la première découpe (20a) présente entre les extrémités frontales (15, 17) des bords d'évasement (14, 16) une largeur sensiblement égale à la largeur (l', l") des autres découpes (22b, 22c).

7. Dispositif d'absorption d'énergie selon la revendication précédente, dans lequel tous les pontets (22a, 22b) présentent une striction (36a, 38a ; 36b, 38b) réduisant leur largeur suivant la direction de déformation (X) à chacune de leur extrémité suivant la direction d'allongement (Y).

8. Assemblage comprenant un dispositif d'absorption d'énergie (4) selon l'une quelconque des revendications précédentes et une pièce support (8), dans lequel le dispositif d'absorption d'énergie (4) est encastré dans un logement (40) ménagé dans la pièce support (8).

9. Ensemble (1) comprenant un dispositif d'absorption d'énergie (4) selon l'une quelconque des revendications 1 à 7 et une tige (6) de section circulaire s'étendant dans la première découpe (20a) perpendiculairement à la direction de déformation (X) et à la direction d'allongement (Y), à l'intérieur de laquelle elle est étroitement reçue.

## Patentansprüche

1. Energieabsorptionseinrichtung (4), insbesondere für einen Kraftfahrzeug-Sitz (10) im Falle eines Aufpralls, wobei die Einrichtung (4) im Wesentlichen in Form einer Platte vorliegt, die eine Folge von Ausschnitten (20a, 20b, 20c) aufweist, die entlang einer Verformungsrichtung (X) zwischen einem ersten Ausschnitt (20a) und einem letzten Ausschnitt (20c) aufeinander folgen und zwischen sich wenigstens eine Brücke (22a, 22b) definieren, die sich entlang einer Ausdehnungsrichtung (Y) transversal zu der Verformungsrichtung (X) erstreckt, wobei der erste Ausschnitt (20a) von einem zweiten Ausschnitt (20b), der ihm entlang der Verformungsrichtung (X) folgt, durch eine erste Brücke (22a) getrennt ist, wobei:
- die erste Brücke (22a) einen ersten Rand (12) aufweist, der sich im Wesentlichen entlang der transversalen Richtung (Y) zwischen zwei Enden (11, 13) erstreckt und den ersten Ausschnitt (20a) begrenzt, und
- der erste Ausschnitt (20a) weiterhin durch zwei Aufweitungsränder (14, 16) begrenzt ist, die sich jeweils im Wesentlichen entlang der Verformungsrichtung (X) erstrecken, bis zu einem vorderen Ende (15, 17), durch welches sie sie sich jeweils an eines der Enden (11, 13) von dem ersten Rand anschließen,
- der erste Ausschnitt (20a) eine sich aufweitende Form entlang der Verformungsrichtung (X) aufweist, in Richtung der folgenden Ausschnitte (20b, 20c), und die Aufweitungsränder zwischen sich einen Aufweitungswinkel (α) zwischen 10° und 40° bilden.

2. Energieabsorptionseinrichtung nach Anspruch 1, wobei der Aufweitungswinkel (α) zwischen 25° und 35° liegt.

3. Energieabsorptionseinrichtung nach Anspruch 1 oder Anspruch 2, wobei Anschluss-Rundungen (32, 34), die einen Krümmungsradius zwischen 1 mm und 2 mm aufweisen, zwischen den vorderen Enden (15, 17) der Aufweitungsränder (14, 16) und den Enden (11, 13) von dem ersten Rand (12) angeordnet sind.

4. Energieabsorptionseinrichtung nach dem vorhergehenden Anspruch, wobei die Anschluss-Rundungen (32, 34) Ausnehmungen in der ersten Brücke (22a) bilden.

5. Energieabsorptionseinrichtung nach einem der vorhergehenden Ansprüche, wobei entlang der Ausdehnungsrichtung (Y) der erste Ausschnitt (20a) zwischen den vorderen Enden (15, 17) der Aufweitungsränder (14, 16) eine Breite (l) im Wesentlichen gleich der Breite (l') von dem zweiten Ausschnitt (20b) aufweist.

6. Energieabsorptionseinrichtung nach dem vorhergehenden Anspruch, umfassend eine Mehrzahl von Brücken (22a, 22b), und wobei, entlang der Ausdehnungsrichtung (Y), der erste Ausschnitt (20a) zwischen den vorderen Enden (15, 17) der Aufweitungsränder (14, 16) eine Breite aufweist, die im Wesentlichen gleich der Breite (l', l") der anderen Ausschnitte (22b, 22c) ist.

7. Energieabsorptionseinrichtung nach dem vorhergehenden Anspruch, wobei jede der Brücken (22a, 22b) an jedem ihrem Ende entlang der Ausdehnungsrichtung (Y) eine Verengung (36a, 38a; 36b 38b) aufweist, die deren Breite entlang der Verformungsrichtung (X) reduziert.

8. Anordnung, umfassend eine Energieabsorptionseinrichtung (4) nach einem der vorhergehenden Ansprüche und ein Halterungsteil (8), wobei die Energieabsorptionseinrichtung (4) in einer Aufnahme (40) aufgenommen ist, die in dem Halterungsteil (8) vorgesehen ist.

9. Anordnung (1) umfassend eine Energieabsorptionseinrichtung (4) nach einem der Ansprüche 1 bis 7 und einen Stab (6) mit kreisförmigem Querschnitt, der sich in dem ersten Ausschnitt (20a) senkrecht zu der Verformungsrichtung (X) und zu der Ausdehnungsrichtung (Y) erstreckt, im Inneren von welchem er eng anliegend aufgenommen ist.

## Claims

1. Energy absorption device (4) in particular for automobile seat (10) of an automobile in case of a shock, said device (4) having substantially the form of a plate having a succession of cutouts (20a, 20b, 20c) following each other in a deformation direction (X) between a first cutout (20a) and a last cutout (20c) and defining between them at least one bridge (22a, 22b) extending in a stretching direction (Y) transverse to the deformation direction (X), the first cutout (20a) is separated from a second cutout (20b) which follows the first cutout according to the deformation direction (X) by a first bridge (22a), wherein:
- said first bridge (22a) has a first edge (12) extending substantially in a transverse direction (Y) between two ends (11, 13) and delimiting the first cutout (20a), and
- the first cutout (20a) is furthermore delimited by two flaring edges (14, 16) each extending substantially in the deformation direction (X) to a front end (15, 17) by which each flaring edge (14, 16) is connected to one of the ends (11, 13) of said first edge,
- the first cutout (20a) has a shape flaring in the deformation direction (X), in the direction of the following cutouts (20b, 20c), and
- said flaring edges form between them a flaring angle (α) between 10 degrees and 40 degrees.

2. Energy absorption device according to claim 1, wherein the flaring angle (α) is between 25 degrees and 35 degrees.

3. Energy absorption device according to claim 1 or claim 2, wherein fillets (32, 34) having a radius of curvature between 1 millimeter and 2 millimeters are interposed between the front ends (15, 17) of the flaring edges (14, 16) and the ends (11, 13) of said first edge (12).

4. Energy absorption device as claimed in the preceding claim, wherein the fillets (32, 34) form hollowed out areas in the first bridge (22a).

5. Energy absorption device according to any of the preceding claims, wherein in the stretching direction (Y), the first cutout (20a) has between the front ends (15, 17) of the flaring edges (14, 16) a width (1) that is substantially equal to the width (l') of the second cutout (20b).

6. Energy absorption device as claimed in the preceding claim, comprising a plurality of bridges (22a, 22b) and wherein, in the stretching direction (Y), the first cutout (20a) has between the front ends (15, 17) of the flaring edges (14, 16) a width that is substantially equal to the width (l', l") of the other cutouts (22b, 22c).

7. Energy absorption device as claimed in the preceding claim, wherein all of the bridges (22a, 22b) have a striction (36a, 38a; 36b, 38b) reducing their width in the deformation direction (X) at each of their ends in the stretching direction (Y).

8. Assembly comprising an energy absorption device (4) according to any of the preceding claims and a support element (8), wherein the energy absorption device (4) is embedded in a housing (40) arranged in the support element (8).

9. Assembly (1) comprising an energy absorption device (4) according to any of claims 1 to 7 and a rod (6) of circular section extending in the first cutout (20a) perpendicularly to the deformation direction (X) and to the stretching direction (Y), in which the rod (6) being closely received.
